Europäisches Patentamt

European Patent Office

Office européen des brevets

(19)

(11) Veröffentlichungsnummer: **0 283 426**
**A2**

(12) # EUROPÄISCHE PATENTANMELDUNG

(21) Anmeldenummer: 88730036.6

(22) Anmeldetag: 15.02.88

(51) Int. Cl.4: **G 01 N 21/41**

(30) Priorität: 17.02.87 DE 3705359

(43) Veröffentlichungstag der Anmeldung:
21.09.88 Patentblatt 88/38

(84) Benannte Vertragsstaaten: **DE FR GB IT NL**

(71) Anmelder: **Franz Schmidt & Haensch GmbH & Co.
Naumannstrasse 33
D-1000 Berlin 62 (DE)**

(72) Erfinder: **Lehnert, Lutz
Filandastrasse 22
D-1000 Berlin 41 (DE)**

(74) Vertreter: **Meissner, Peter E., Dipl.-Ing. et al
Meissner & Meissner Patentanwälte Herbertstrasse 22
D-1000 Berlin 33 Grunewald (DE)**

(54) Elektronisches Refraktometer.

(57) Die Erfindung betrifft ein elektronisches Refraktometer mit einem dem Meßprisma nachgeordneten Sensor zur Bestimmung der Grenzlinie der Totalreflexion und damit des Brechungsindexes einer auf dem Meßprisma befindlichen Probe sowie mit einer vor dem Meßprisma angeordneten justierbaren Lichtquelle. Um ein elektronisches Refraktometer der genannten Art so auszubilden, daß auf dem Prisma ein homogener Lichtfleck erhalten wird, und zwar reproduzierbar, d.h. auch nach einem eventuell durchgeführten Lampenwechsel wird vorgeschlagen, daß zwischen der Lichtquelle (1) und dem Prisma (8) ein Glasfaserlichtleiter (5,6) angeordnet ist, dadurch dessen Zwischenschaltung das Licht zu einem homogenen Lichtfleck auf dem Prisma konzentrierbar ist.

EP 0 283 426 A2

Bundesdruckerei Berlin

## Beschreibung

Die Erfindung betrifft ein elektronisches Refraktometer gemäß dem Oberbegriff des Patentanspruchs 1.

Bei derartigen Refraktometern wird als Lichtquelle im allgemeinen eine Glühlampe gewählt, deren Lebensdauer bekannterweise begrenzt ist. Von Zeit zu Zeit ist es daher notwending, einen Lampenwechsel vorzunehemen, und für derartige elektronische Refraktometer, die nach dem Einschalten ohne Messung einer Referenzprobe betriebsbereit sein sollen, ist es absolut notwendig, daß der Beleuchtungsstrahlengang auch nach einem derartigen Lampenwechsel reproduzierbar erhalten bleibt. In gewissen Grenzen läßt sich dies dadurch erreichen, daß von vorjustierten Lampen ausgegangen wird. Nachteilig ist, daß bei heutigen hochgenauen Refraktometern sich bereits die Herstellungstoleranz der Glühlampenwendel auf den Meßwert auswirkt, denn der Fehler von ca. 0,0001 RI entspricht nur einigen μ-Metern in der Geometrie des Strahlenganges. Ein weiterer Nachteil tritt dadurch auf, daß sich bereits Reflexionen am Lampenkolben als Störstellen in der Ausleuchtung der Sensorfläche bemerkbar machen und so ebenfalls zu Meßfehlern führen.

Refraktometer, die z.B. in der Zuckerindustrie eingesetzt werden, arbeiten mit monochromatischem Licht. Dieses monochromatische Licht läßt sich mit relativ kleinem Aufwand mittels Interferenzfilter aus Glühlampenlicht ausfiltern. Wesentlich ist aber, daß sich dabei ein Interferenzfilter im parallelen Licht befinden muß. Ist dies nicht der Fall, so treten Meßwellenlängen-Änderungen auf, und schließlich ergeben sich auch Fehler dadurch, daß Inhomogenitäten in den Filtern vorliegen können, die dann zu Störstellen bei der Ausleuchtung führen.

Aufgabe der Erfindung ist es daher, ein elektronisches Refraktometer der eingangs genannten Art so auszubilden, daß auf dem Prisma ein homogener Lichtfleck erhalten wird, und zwar reproduzierbar, d.h. auch nach einem evt. durchgeführten Lampenwechsel.

Diese Aufgabe wird erfindungsgemäß dadurch gelöst, daß zwischen der Lichtquelle und dem Prisma ein das Licht zu einem homogenen Lichtfleck auf dem Prisma konzentrierender Glasfaserlichtleiter angeordnet wird.

Der Vorteil ist darin zu sehen, daß ein derartiger Glasfaserlichtleiter, bspw. etwaige Justierfehler beim Neueinsetzen einer Lampe, ausgleicht, weil der Lichtaustrittsfleck von der Austrittsöffnung des Glasfaserlichtleiters bestimmt wird und diese Öffnung auch bei einem Lampenwechsel unverändert gegenüber dem Prisma angeordnet bleibt. Etwaige Justierfehler der Lampe führen dann allenfalls zu gewissen Intensitätsveränderungen dieses Lichtfleckes, die aber für die Messung nicht von wesentlicher Bedeutung sind bzw. ausgeglichen werden können.

Eine besonders vorteilhafte Ausgestaltung der erfindungsgemäßen Lösung ergibt sich aus den Merkmalen des Anspruchs 2.

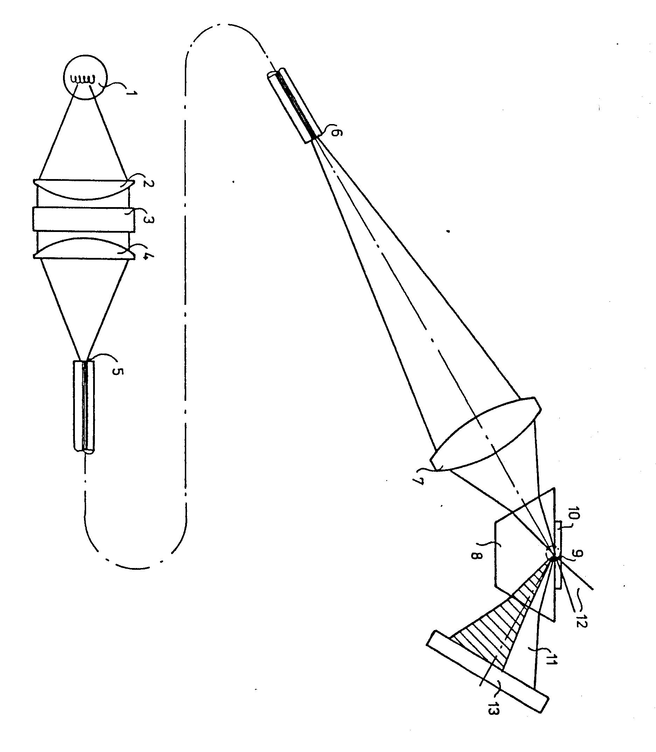

Die Erfindung soll nachfolgend anhand einer Skizze erläutert werden, wobei hier nur die für das Verständnis der Erfindung notwendigen Teile des Refraktometers dargestellt sind. Hierbei handelt es sich einerseits um die Glühlampe 1, das Prisma 8, die Probe 10, die sich auf dem Prisma befindet sowie den Sensor 13 zur Bestimmung der Grenzlinie der Totalreflexion. Nicht dargestellt ist die Ausertungseinheit, die aus der Position der Grenzlinie der Totalreflexion den Wert für den Brechungsindex der Probe 10 ableitet. Die in einem festen Metallsockel eingekittete Glühlampe 1 wird in einer passenden Fassung so vorjustiert, daß sich die Wendel mit einer relativ großen Toleranz in einem definierten optischen Feld befindet. Mittels eines Kollimators, bestehend aus zwei Sammellinsen 2 und 4 und, wenn erforderlich, einem Interferenzfilter 3 wird ein Teil der Lampenwendel auf die Eingangsfläche eines Glasfaserlichtleiters 5, bestehend aus unmantelten Einzelglasfasern mit typisch 50 - 80μm Durchmesser abgebildet. Die Abbildung kann in kleinem Maße unscharf sein. Am anderen Ende des Lichtleiters 6 entsteht ein homogener Leuchtfleck, der ortsfest zu der abbildenden Optik 7 und dem Meßprisma 8 so angeordnet werden kann, daß eine scharfe Abbildung auf der Meßfläche des Prismas 9 entsteht. In Abhängigkeit von der auf der Meßfläche befindlichen Probe wird der Lichtkegel teilweise totalreflektiert 11 oder entsprechend den Fressnel'schen Reflexionsgesetzen teilweise reflektiert 11 und transmittiert 12.

## Patentansprüche

1. Elektronisches Refraktometer mit einem dem Meßprisma nachgeordneten Sensor zur Bestimmung der Grenzlinie der Totalreflexion und damit des Brechungsindexes einer auf dem Meßprisma befindlichen Probe sowie mit einer vor dem Meßprisma angeordneten justierbaren Lichtquelle,
**dadurch gekennzeichnet,**
daß zwischen der Lichtquelle (1) und dem Prisma (8) ein Glasfaserlichtleiter (5, 6) angeordnet ist, durch dessen Zwischenschaltung das Licht zu einem homogenen Lichtfleck auf dem Prisma konzentrierbar ist.

2. Elektronisches Refraktometer nach Anspruch 1,
**dadurch gekennzeichnet,**
daß zwischen der Lichtquelle (1) und der Eintrittsöffnung (5) des Glasfaserlichtleiters ein Kollimator (2, 4) und zwischen der Austrittsöffnung (6) des Glasfaserlichtleiters und dem Meßprisma (8) eine abbildende Optik (7) angeordnet sind.

0283426